# EUROPEAN PATENT APPLICATION

(11) **EP 4 478 511 A1**
(43) Date of publication of application: **18.12.2024**
(21) Application number: 23770677.5
(22) Date of filing: 10.03.2023
(51) Int. Cl.: H01M 50/271, H01G 11/12, H01G 11/78, H01M 50/209, H01M 50/211, H01M 50/213, H01M 50/507

(54) **POWER STORAGE DEVICE**

(30) Priority: 16.03.2022 JP 2022041391
(71) Applicant: GS Yuasa International Ltd., Kisshoin, Minami-ku, Kyoto-shi, Kyoto 601-8520 (JP)
(72) Inventor: OKUNO Yasunori, Kyoto-shi, Kyoto 601-8520 (JP); IWASHIMA Yasuyuki, Kyoto-shi, Kyoto 601-8520 (JP); MAEDA Koki, Kyoto-shi, Kyoto 601-8520 (JP)
(74) Representative: Isarpatent
(86) International application number: PCT/JP2023/009316
(87) International publication number: WO 2023/176722

(57) **Abstract**

An energy storage apparatus includes a plurality of energy storage devices arranged side by side, a plurality of cell holders, and an outer case that accommodates a plurality of the energy storage devices and a plurality of the cell holders. Each of a plurality of the cell holders is arranged along a side surface of one of a plurality of the energy storage devices, the side surface being in an arrangement direction of a plurality of the energy storage devices. The outer case includes an outer case main body having an opening portion, and a lid body that closes the opening portion. The lid body includes a projecting portion projecting toward at least one of a plurality of the cell holders. The projecting portion performs pressing by causing at least one of the cell holders to be brought into contact with the projecting portion in a projecting direction.

## Description

### TECHNICAL FIELD

The present invention relates to an energy storage apparatus.

### BACKGROUND ART

Patent Document 1 discloses a secondary battery pack including an exterior case including an openable and closable lid body and a plurality of unit cells accommodated in the exterior case. In this secondary battery pack, a fixing tool projecting toward the inside of the exterior case is attached to the lid body with a bolt or the like. The fixing tool can fix the unit cell to the exterior case by pressing an outer surface of the unit cell.

### PRIOR ART DOCUMENTS

### PATENT DOCUMENTS

Patent Document 1: JP-A-2015-22909

### SUMMARY OF THE INVENTION

### PROBLEMS TO BE SOLVED BY THE INVENTION

In an energy storage apparatus including an energy storage device and an outer case which accommodates the energy storage device, in a case where the energy storage device moves inside the outer case due to vibration or the like, an event that damages reliability of the energy storage apparatus such as a failure occurring in a joint portion between the energy storage device and a conductive member may occur. In the above conventional secondary battery pack, the unit cell in the exterior case is pressed by the fixing tool from above, so that movement in a vertical direction of the unit cell is restricted. In this case, it is necessary to attach the fixing tool as a separate member in the exterior case, which causes increase in the number of components of the secondary battery pack or complication of a manufacturing process.

The present invention has been made by the inventor of the present application focusing newly on the above problem, and an object of the present invention is to provide an energy storage apparatus having improved reliability with a simple configuration.

### MEANS FOR SOLVING THE PROBLEMS

An energy storage apparatus according to one aspect of the present invention includes a plurality of energy storage devices disposed and aligned, a plurality of holders, and an outer case which accommodates a plurality of the energy storage devices and a plurality of the holders. Each of a plurality of the holders is disposed along a side surface of an energy storage device included in a plurality of the energy storage devices, the side surface being in an arrangement direction of a plurality of the energy storage devices, the outer case includes an outer case main body having an opening portion and a lid body that closes the opening portion, and the lid body includes a projecting portion that projects toward at least one holder among a plurality of holders and presses the at least one holder in a projecting direction of the projecting portion.

An energy storage apparatus according to one aspect of the present invention includes an energy storage device, a holder that holds the energy storage device, and an outer case that accommodates the energy storage device and the holder. The outer case includes an outer case main body having an opening portion and a lid body that closes the opening portion, the lid body includes a projecting portion that projects toward the holder and presses the holder in a projecting direction of the projecting portion, and the projecting portion presses a region of the holder, the region not overlapping the energy storage device, in a case of being viewed in an arrangement direction of the lid body and the outer case main body.

An energy storage apparatus according to one aspect of the present invention includes a plurality of energy storage devices disposed and aligned, a plurality of holders, and an outer case which accommodates a plurality of the energy storage devices and a plurality of the holders. Each of a plurality of the holders is disposed along a side surface of an energy storage device included in a plurality of the energy storage devices, the side surface being in an arrangement direction of a plurality of the energy storage devices, the outer case includes an outer case main body having an opening portion and a lid body that closes the opening portion, and the lid body includes a projecting portion that projects toward at least one holder among a plurality of the holders and is brought into contact with the at least one holder in a projecting direction of the projecting portion.

An energy storage apparatus according to one aspect of the present invention includes an energy storage device, a holder that holds the energy storage device, and an outer case that accommodates the energy storage device and the holder. The outer case includes an outer case main body having an opening portion and a lid body that closes the opening portion, the lid body includes a projecting portion that projects toward the holder and is brought into contact with the holder in a projecting direction of the projecting portion, and the projecting portion is brought into contact with a region of the holder, the region not overlapping the energy storage device, in a case of being viewed in an arrangement direction of the lid body and the outer case main body.

### ADVANTAGES OF THE INVENTION

According to the present invention, an energy storage apparatus having a simple configuration and improved reliability can be provided.

### BRIEF DESCRIPTION OF THE DRAWINGS

Fig. 1 is a perspective view illustrating an external appearance of an energy storage apparatus according to an embodiment.
Fig. 2 is an exploded perspective view of the energy storage apparatus according to the embodiment.
Fig. 3 is an exploded perspective view of an energy storage device unit according to the embodiment.
Fig. 4 is a perspective cross-sectional view of the energy storage apparatus according to the embodiment.
Fig. 5 is a perspective view illustrating an external appearance of a cell holder according to the embodiment.
Fig. 6 is a perspective view of a lid body according to the embodiment.
Fig. 7 is a perspective view illustrating a structural relationship between a projecting portion, a plurality of the cell holders, and a plurality of energy storage devices according to the embodiment.
Fig. 8 is a plan view illustrating a position of the cell holder according to the embodiment, the position being the projecting portion 18 can be brought into contact with one or more of the cell holders or pressed by the projecting portion.
Fig. 9 is a cross-sectional view schematically illustrating a configuration of the projecting portion and around the projecting portion according to a first modification example of the embodiment.
Fig. 10 is a cross-sectional view schematically illustrating a configuration of the projecting portion and around the projecting portion according to a second modification example of the embodiment.
Fig. 11 is a cross-sectional view schematically illustrating a configuration of the projecting portion and around the projecting portion according to a third modification example of the embodiment.

### MODE FOR CARRYING OUT THE INVENTION

(1) An energy storage apparatus according to one aspect of the present invention includes a plurality of energy storage devices disposed and aligned, a plurality of holders, and an outer case which accommodates a plurality of the energy storage devices and a plurality of the holders. Each of a plurality of the holders is disposed along a side surface of an energy storage device included in a plurality of the energy storage devices, the side surface being in an arrangement direction of a plurality of the energy storage devices, the outer case includes an outer case main body having an opening portion and a lid body that closes the opening portion, and the lid body includes a projecting portion that projects toward at least one holder among a plurality of holders and presses the at least one holder in a projecting direction of the projecting portion.

According to the energy storage apparatus according to one aspect of the present invention, the lid body is fixed to the outer case main body, so that the holder that holds the energy storage device is pressed by the projecting portion of the lid body. By the above, movement of the holder inside the outer case can be restricted, and as a result, movement of the energy storage device held by the holder is restricted. Therefore, in the energy storage apparatus including a plurality of the energy storage devices, movement (positional displacement) of a plurality of the energy storage devices due to vibration or impact at the time of manufacturing, using, transporting or the like of the energy storage apparatus is restricted. By the above, occurrence of a defect of the energy storage apparatus 1 caused by vibration or impact is prevented. Furthermore, since the projecting portion restricts movement of the energy storage device via the holder, damage or the like of the energy storage device by the projecting portion hardly occurs. As described above, the energy storage apparatus according to the present aspect is an energy storage apparatus having a simple configuration and improved reliability.

(2) In the energy storage apparatus according to (1) above, the energy storage apparatus may further include an insulating member disposed between the energy storage device and the lid body, and the projecting portion may press the at least one holder in the projecting direction via the insulating member.

According to the energy storage apparatus described in (2) above, also in a case where the holder is formed of a relatively hard material to improve reliability of holding of the energy storage device, tolerance of each of the projecting portion and the holder can be absorbed by the insulating member interposed between the projecting portion and the holder. For this reason, damage of the energy storage device due to pressing force of the projecting portion is more reliably prevented.

(3) In the energy storage apparatus according to (2) above, the energy storage device may include a terminal, and the insulating member may be a bus bar holder that holds a bus bar joined to the terminal, or a bus bar cover that is disposed between the bus bar and the lid body and covers the bus bar.

According to the energy storage apparatus described in (3) above, the bus bar holder or the bus bar cover used for positioning the bus bar or electrically insulating the bus bar from other members can be used as a member for absorbing tolerance of the projecting portion and the like.

(4) In the energy storage apparatus according to any one of (1) to (3) above, a groove portion or a convex part with which the projecting portion comes into contact may be provided at a position facing in the projecting direction.

According to the energy storage apparatus described in (4) above, in a case where the groove portion is provided at a position facing the projecting portion, a tip of the projecting portion is guided to the inside of the groove portion. For this reason, the projecting portion can be caused to press a target position. As a result, the projecting portion can more reliably press the holder directly or indirectly. In a case where the convex part is provided at a position facing the projecting portion, at least a part of the convex part is actively pushed by the projecting portion or crushed as a result, so that the projecting portion can more reliably press the holder directly or indirectly.

(5) In the energy storage apparatus according to any one of (1) to (4) above, the projecting portion may press a region that is the at least one holder and does not overlap the energy storage device in a case of being viewed in an arrangement direction of the lid body and the outer case main body.

According to the energy storage apparatus described in (5) above, pressing force by the projecting portion is hardly applied to the energy storage device. Therefore, there is a low possibility that the energy storage device is damaged or the like, and furthermore, also in a case where movement of the holder and the energy storage device is more reliably restricted by increasing pressing force of the projecting portion with respect to the holder, deformation or the like of the case of the energy storage device due to the pressing force is less likely to occur.

(6) In the energy storage apparatus according to any one of (1) to (5) above, the projecting portion may collectively press a plurality of the holders in the projecting direction.

According to the energy storage apparatus described in (6) above, since one of the projecting portion can press a plurality of the holders to substantially uniform positions in the projecting direction of the projecting portion, a gap is hardly generated between the positions of a plurality of the energy storage devices. Therefore, in the bus bar joined to two or more of the energy storage devices adjacent to each other, at a joint portion with the energy storage devices, stress concentration due to displacement of positions in the projecting direction of the projecting portion of the two or more of the energy storage devices is less likely to occur.

(7) An energy storage apparatus according to one aspect of the present invention includes an energy storage device, a holder that holds the energy storage device, and an outer case that accommodates the energy storage device and the holder. The outer case includes an outer case main body having an opening portion and a lid body that closes the opening portion, the lid body includes a projecting portion that projects toward the holder and presses the holder in a projecting direction of the projecting portion, and the projecting portion presses a region of the holder, the region not overlapping the energy storage device, in a case of being viewed in an arrangement direction of the lid body and the outer case main body.

According to the energy storage apparatus according to one aspect of the present invention, the lid body is fixed to the outer case main body, so that the holder that holds the energy storage device is pressed by the projecting portion of the lid body. By the above, movement of the holder inside the outer case can be restricted, and as a result, movement of the energy storage device held by the holder is restricted. Movement of the energy storage device in the inside of the outer case (particularly, movement in an arrangement direction of the lid body and the outer case main body) is restricted by the lid body. Furthermore, since the projecting portion presses a position of the holder, the position not overlapping the energy storage device, pressing force by the projecting portion is hardly applied to the energy storage device. Therefore, also in a case where movement of the holder and the energy storage device is more reliably restricted by increasing pressing force of the projecting portion with respect to the holder, deformation or the like of the case of the energy storage device due to the pressing force is less likely to occur. As described above, the energy storage apparatus according to the present aspect is an energy storage apparatus having a simple configuration and improved reliability.

(8) An energy storage apparatus according to one aspect of the present invention includes a plurality of energy storage devices disposed and aligned, a plurality of holders, and an outer case which accommodates a plurality of the energy storage devices and a plurality of the holders. Each of a plurality of the holders is disposed along a side surface of an energy storage device included in a plurality of the energy storage devices, the side surface being in an arrangement direction of a plurality of the energy storage devices, the outer case includes an outer case main body having an opening portion and a lid body that closes the opening portion, and the lid body includes a projecting portion that projects toward at least one holder among a plurality of the holders and is brought into contact with the at least one holder in a projecting direction of the projecting portion.

According to the energy storage apparatus according to one aspect of the present invention, the lid body is fixed to the outer case main body, so that the holder that holds the energy storage device is brought into contact with the projecting portion of the lid body. By the above, movement of the holder inside the outer case can be restricted, and as a result, movement of the energy storage device held by the holder is restricted. Therefore, in the energy storage apparatus including a plurality of the energy storage devices, movement (positional displacement) of a plurality of the energy storage devices due to vibration or impact at the time of manufacturing, using, transporting or the like of the energy storage apparatus is restricted. By the above, occurrence of a defect of the energy storage apparatus 1 caused by vibration or impact is prevented. Furthermore, since the projecting portion restricts movement of the energy storage device via the holder, damage or the like of the energy storage device by the projecting portion hardly occurs. As described above, the energy storage apparatus according to the present aspect is an energy storage apparatus having a simple configuration and improved reliability.

(9) An energy storage apparatus according to one aspect of the present invention includes an energy storage device, a holder that holds the energy storage device, and an outer case that accommodates the energy storage device and the holder. The outer case includes an outer case main body having an opening portion and a lid body that closes the opening portion, the lid body includes a projecting portion that projects toward the holder and is brought into contact with the holder in a projecting direction of the projecting portion, and the projecting portion is brought into contact with a region of the holder, the region not overlapping the energy storage device, in a case of being viewed in an arrangement direction of the lid body and the outer case main body.

According to the energy storage apparatus according to one aspect of the present invention, the lid body is fixed to the outer case main body, so that the holder that holds the energy storage device is brought into contact with the projecting portion of the lid body. By the above, movement of the holder inside the outer case can be restricted, and as a result, movement of the energy storage device held by the holder is restricted. Movement of the energy storage device in the inside of the outer case (particularly, movement in an arrangement direction of the lid body and the outer case main body) is restricted by the lid body. Furthermore, since the projecting portion is brought into contact with a position of the holder, the position not overlapping the energy storage device, the projecting portion is less likely to affect the energy storage device. Therefore, deformation or the like of the case of the energy storage device due to contact of the projecting portion hardly occurs. As described above, the energy storage apparatus according to the present aspect is an energy storage apparatus having a simple configuration and improved reliability.

In description below and the drawings, a facing direction of short side surfaces of an energy storage device, or a longitudinal direction of a lid plate of a case of an energy storage device is defined as a Y-axis direction. An arrangement direction of a plurality of energy storage devices or a facing direction of long side surfaces of an energy storage device is defined as an X-axis direction. An arrangement direction of a main body (outer case main body) of an outer case of an energy storage apparatus and a lid body or a vertical direction is defined as a Z-axis direction. The X-axis direction, the Y-axis direction, and the Z-axis direction are directions intersecting (in the present embodiment, orthogonal to) each other. Although a case where the Z-axis direction is not the vertical direction can be considered depending on a usage mode, the Z-axis direction will be described below as the vertical direction for convenience of description.

In description below, an X-axis positive direction indicates an arrow direction of the X axis, and an X-axis negative direction indicates a direction opposite to the X-axis positive direction. The same applies to the Y-axis direction and the Z-axis direction. The term "X-axis direction" simply means either one or both directions parallel to the X axis. The same applies to terms related to the Y-axis and the Z-axis.

Expressions indicating a relative direction or postures, such as parallel and orthogonal, include a case where the direction or postures are not strictly expressed. That two directions are orthogonal to each other not only means that the two directions are completely orthogonal to each other, but also means that the two directions are substantially orthogonal to each other, that is, a difference of about several percent is included. In description below, expression "insulation" means "electrical insulation".

### (Embodiment)

### [1. General description of energy storage apparatus]

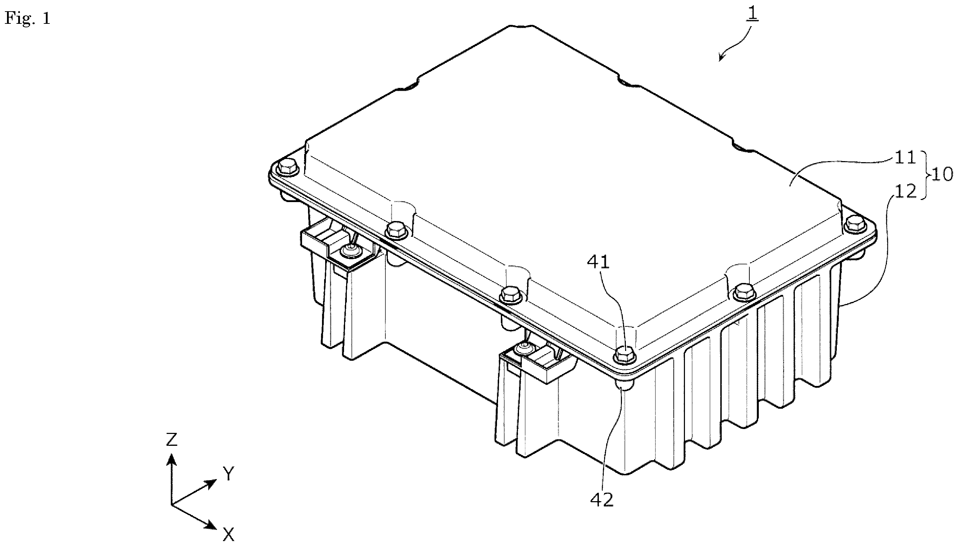

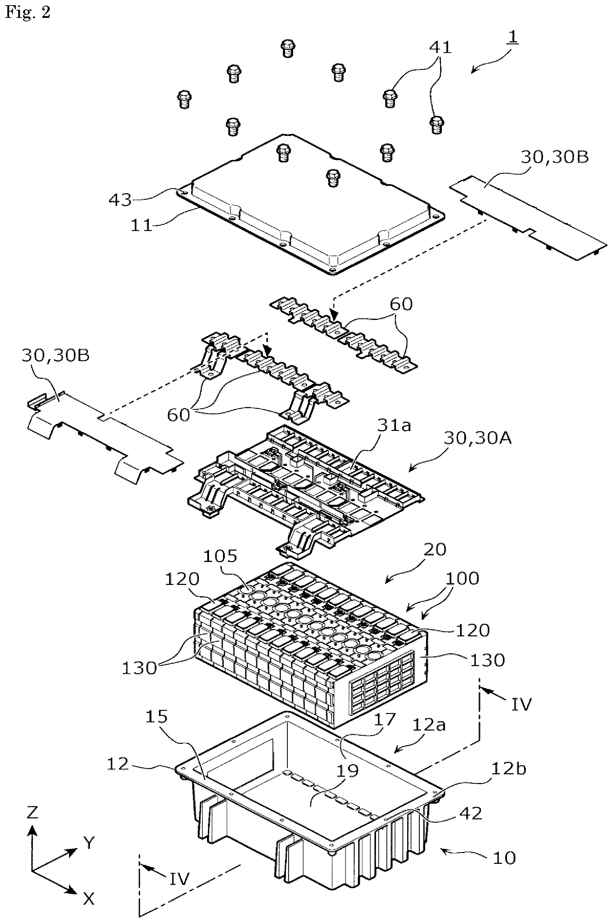

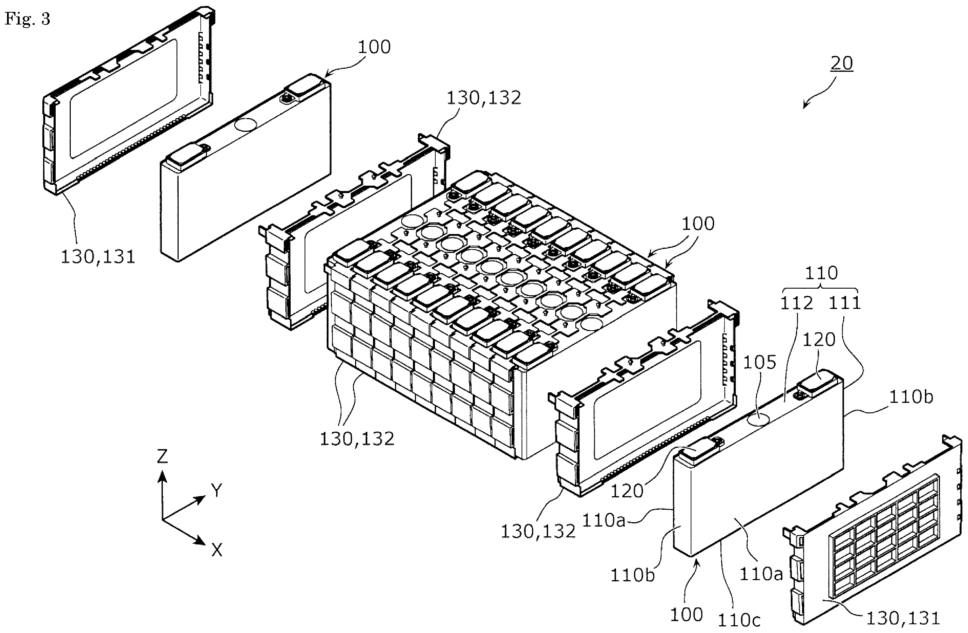

First, a schematic configuration of an energy storage apparatus 1 according to an embodiment will be described. Fig. 1 is a perspective view illustrating an external appearance of the energy storage apparatus 1 according to the embodiment. Fig. 2 is an exploded perspective view of the energy storage apparatus 1 according to the embodiment. Fig. 3 is an exploded perspective view of an energy storage device unit 20 according to the embodiment. In addition to members illustrated in Figs. 2 and subsequent drawings, a sensor for temperature and voltage measurement, and other members such as an electric wire connected to the sensor are also accommodated in an outer case 10, but illustration and description of these members are omitted.

The energy storage apparatus 1 is an apparatus capable of being charged with electricity from the outside and discharging electricity to the outside. The energy storage apparatus 1 is a battery module (assembled battery) used for energy storage application, power supply application, or the like. Specifically, the energy storage apparatus 1 is used as a battery or the like for driving or starting an engine of a moving body such as an automobile, a motorcycle, a watercraft, a ship, a snowmobile, an agricultural machine, a construction machine, or a railway vehicle for electric railway. Examples of the automobile include an electric vehicle (EV), a hybrid electric vehicle (HEV), a plug-in hybrid electric vehicle (PHEV), and an automobile of fossil fuel (gasoline, light oil, liquefied natural gas, or the like). Examples of the railway vehicle for an electric railway include a train, a monorail, a linear motor car, and a hybrid train including both a diesel engine and an electric motor. The energy storage apparatus 1 can also be used as a stationary battery or the like used for home use, commercial use, or the like.

As illustrated in Fig. 1 and Fig. 2, the energy storage apparatus 1 includes the outer case 10 and the energy storage device unit 20 accommodated in the outer case 10. Two types of insulating members 30 are disposed above the energy storage device unit 20. To be more specific, a bus bar holder 30A which holds a bus bar 60 joined to an energy storage device 100 and a bus bar cover 30B which covers the bus bar 60 and is fixed to the bus bar holder 30A are disposed above the energy storage device unit 20. Hereinafter, in the present embodiment, the "insulating member 30" means at least one of the bus bar holder 30A and the bus bar cover 30B.

The outer case 10 is a box-shaped case (module case) which forms a housing of the energy storage apparatus 1. The outer case 10 may be any case that forms a space in the inside, and an outer shape of the outer case 10 is appropriately determined. The outer case 10 is disposed outward of the energy storage device unit 20 and the bus bar holder 30A, fixes them at a predetermined position, and protects them from an impact or the like. In the present embodiment, the outer case 10 is formed of metal such as iron, aluminum, or an aluminum alloy. As a material for forming the outer case 10, resin or the like can also be employed in addition to metal. Examples of the resin include polycarbonate (PC), polypropylene (PP), polyethylene (PE), polystyrene (PS), polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), and ABS resin.

The outer case 10 includes an opening portion 12a which is provided at an end portion in the Z-axis positive direction and into which the energy storage device unit 20 can be inserted, and a bottom wall portion 19 which is formed at a position facing the opening portion 12a. To be more specific, the outer case 10 includes an outer case main body 12 and a lid body 11, and the opening portion 12a and the bottom wall portion 19 are formed on the outer case main body 12. The outer case main body 12 is a bottomed rectangular cylindrical housing in which the opening portion 12a is formed, and accommodates the energy storage device unit 20. The outer case main body 12 includes side wall portions 15 and 17 which face each other in the Y-axis direction and separates the inside and the outside of the outer case 10 from each other. The energy storage device unit 20 is disposed between the outer wall portion 17 and the side wall portion 15 in the Y-axis direction. The outer case 10 may include elements not illustrated in Figs. 1 and 2, such as an exhaust tube for discharging gas inside the outer case 10 to the outside.

The lid body 11 is a rectangular member which closes the opening portion 12a of the outer case main body 12. The lid body 11 is joined to the outer case main body 12 by a plurality of bolts 41, so that the lid body 11 is fixed to the outer case main body 12. Specifically, a through hole 43 that the bolt 41 penetrates is provided in a peripheral edge portion of the lid body 11, and a fixing hole portion 42 is provided in an opening peripheral edge portion 12b which is a peripheral edge portion of the opening portion 12a of the outer case main body 12. The bolt 41 is screwed into the fixing hole portion 42 of the outer case main body 12 in a state of penetrating the through hole 43 of the lid body 11. By the above, the lid body 11 is joined to the opening peripheral edge portion 12b of the outer case main body 12.

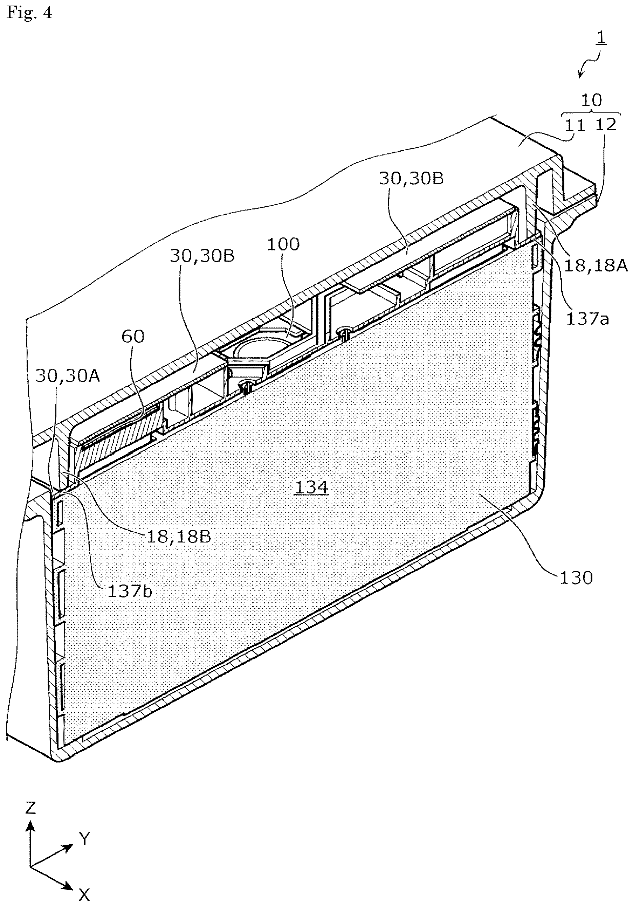

Although not illustrated in Fig. 1 or Fig. 2, the lid body 11 according to the present embodiment includes a projecting portion 18 which projects toward the energy storage device unit 20 from an inner surface (a surface in the Z-axis negative direction) of the lid body 11. The projecting portion 18 is a portion which is a part of the lid body 11 and presses a plurality of cell holders 130 of the energy storage device unit 20. A configuration of the projecting portion 18 and around the projecting portion 18 will be described later with reference to Figs. 4 to 8.

The energy storage device unit 20 includes a plurality of the energy storage devices 100 and the cell holder 130 which holds each of a plurality of the energy storage devices 100. The energy storage device 100 is a secondary battery (battery cell) capable of being charged with electricity and discharging electricity, and more specifically, is a nonaqueous electrolyte secondary battery such as a lithium ion secondary battery. As illustrated in Fig. 3, the energy storage device 100 includes a case 110 having a flat rectangular parallelepiped (prismatic) shape and a pair of terminals 120 (of a positive electrode and a negative electrode) fixed to the case 110. An electrode assembly, a current collecting member, electrolyte solution, and the like (not illustrated) are accommodated in the case 110. Examples of the electrode assembly of the energy storage device 100 include a winding-type electrode assembly formed by winding a positive electrode plate and a negative electrode plate with a separator sandwiched between the positive electrode plate and the negative electrode plate in a layered manner. Other than the above, the energy storage device 100 may include a layered-type (stacked-type) electrode assembly formed by layering a plurality of plate-shaped electrode plates, or a bellows-type electrode assembly formed by folding the electrode plates in a bellows shape.

The energy storage device 100 is not limited to a nonaqueous electrolyte secondary battery, and may be a secondary battery other than a nonaqueous electrolyte secondary battery, or may be a capacitor. The energy storage device 100 does not need to be a secondary battery and may be a primary battery that can use stored electricity without being charged by the user. The energy storage device 100 may be a battery using a solid electrolyte. The energy storage device 100 may be a pouch-type energy storage device. Further, a shape of the energy storage device 100 is not limited to the above-mentioned prismatic shape, and may be a polygonal columnar shape, a cylindrical shape, an elliptic columnar shape, an oval columnar shape, or the like other than the prismatic shape.

In the present embodiment, as illustrated in Fig. 3, the case 110 includes a case main body 111 and a lid plate 112 that closes an opening of the case main body 111. The case 110 has a structure in which the inside is sealed as the case main body 111 and the lid plate 112 are joined by welding or the like after an electrode assembly and the like are accommodated in the inside of the case main body 111. The material of the case 110 (the case main body 111 and the lid plate 112) is not particularly limited. For example, weldable (joinable) metal such as stainless steel, aluminum, an aluminum alloy, iron, or a plated steel plate may be used, or resin may be used.

The case main body 111 has a pair of long side surfaces 110a, a pair of short side surfaces 110b, and a bottom surface 110c disposed at a position facing the lid plate 112. The terminals 120 of a positive electrode and a negative electrode and a gas release valve 105 are disposed on the lid plate 112. The gas release valve 105 is a part that is opened by receiving internal pressure of the case 110 in a case where the internal pressure is excessively increased, so that gas inside the case 110 is discharged to the outside. In the energy storage device unit 20, a plurality of the energy storage devices 100 are disposed in a posture in which the long side surfaces 110a are directed in the arrangement direction (X-axis direction) and the bottom surface 110c is directed in the Z-axis negative direction. In the present embodiment, the arrangement direction of a plurality of the energy storage devices 100 coincides with the X-axis direction.

The energy storage device unit 20 includes twelve of the energy storage devices 100 configured as described above. In the present embodiment, each of twelve of the energy storage devices 100 is disposed between two of the cell holders 130. That is, the energy storage device unit 20 according to the present embodiment includes thirteen of the cell holders 130. Each of thirteen of the cell holders 130 is an example of a holder. Among the cell holders 130, a pair of the cell holders 130 located at both ends in the X-axis direction are referred to as cell holders 131 in a case of being distinguished from the others. Among the cell holders 130, the cell holder 130 located between two of the energy storage devices 100 adjacent to each other is referred to as a cell holder 132 in a case of being distinguished from the others.

That is, each of a plurality (thirteen in the present embodiment) of the cell holders 130 holds one of a plurality (twelve in the present embodiment) of the energy storage devices 100. More specifically, the cell holder 132 is a member called an inter-cell holder, and holds one of the energy storage devices 100 located on another side in the X-axis direction in addition to one of the energy storage devices 100 located on one side in the X-axis direction. The cell holder 131 is a member called an end holder, and holds one of the energy storage devices 100 located in the X-axis positive direction or the X-axis negative direction.

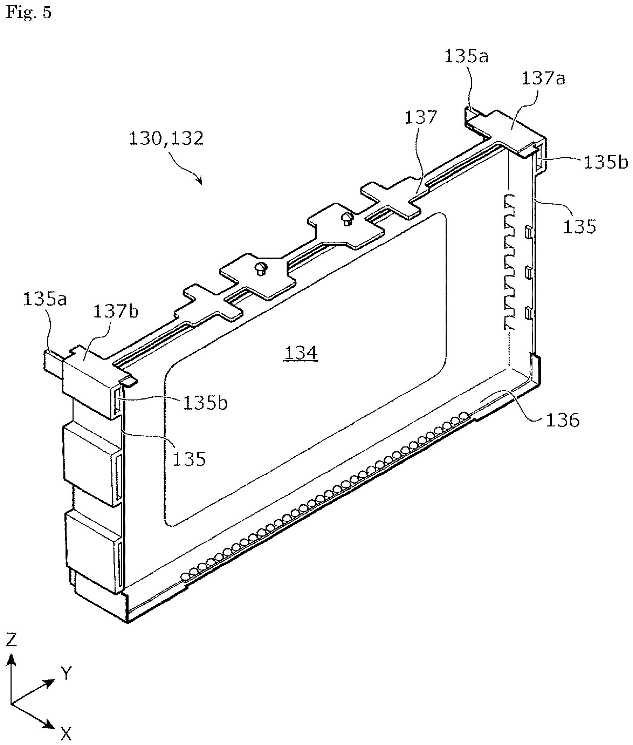

The cell holder 130 has a function of stabilizing a position of the energy storage device 100 by holding the energy storage device 100. The cell holder 130 has a function of insulating the case 110 of the energy storage device 100 from a conductive member (including the case 110 of another one of the energy storage devices 100) adjacent to the energy storage device 100. The cell holder 130 is formed of any of resin materials having electrical insulation property among materials that can be employed as a material of the outer case 10. The cell holder 130 is preferably formed of a material having volume resistivity of 1 × 10¹⁰Ω ·m or more at normal temperature (20°C). A detailed configuration of the cell holder 130 will be described later with reference to Fig. 5 and the like.

The bus bar holder 30A is the insulating member 30 having a flat rectangular shape which is disposed to face the lid plate 112 of the energy storage device 100 and holds a plurality of the bus bars 60. The bus bar holder 30A is formed of any of resin materials having electrical insulation property among materials that can be employed as a material of the outer case 10. The bus bar 60 disposed in a bus bar opening portion 31a of the bus bar holder 30Ais positioned with respect to the terminal 120 to be joined, and in this state, is joined to the terminal 120 by laser welding. In the present embodiment, among twelve of the energy storage devices 100 included in the energy storage device unit 20, three of the energy storage devices 100 disposed in a row are connected in parallel by the bus bars 60. By the above, four sets of the energy storage devices 100 connected in parallel are formed. Four sets of the energy storage devices 100 are connected in series by three of the bus bars 60.

That is, the terminals 120 of the energy storage devices 100 of a set of both end portions in four sets of the energy storage devices 100 connected in series are a positive electrode (total positive terminal) and a negative electrode (total negative terminal) of the energy storage device unit 20. In the present embodiment, among twelve of the energy storage devices 100, the terminal 120 of a positive electrode of one set (three) of the energy storage devices 100 of an end portion in the X-axis negative direction is a positive electrode (total positive terminal) of the energy storage device unit 20. Among twelve of the energy storage devices 100, the terminal 120 of a negative electrode of one set (three) of the energy storage devices 100 of an end portion in the X-axis positive direction is a negative electrode (total negative terminal) of the energy storage device unit 20.

Although not illustrated in the drawings, the side wall portion 15 of the outer case 10 is provided with an opening portion through which an end portion of the bus bar 60 joined to each of a positive electrode and a negative electrode of the energy storage device unit 20 penetrates. An end portion of each of these two of the bus bars 60 is exposed to the outside of the outer case 10 through an opening portion formed on the side wall portions 15 (see Fig. 1), and function as a positive electrode external terminal and a negative electrode external terminal of the energy storage apparatus 1.

A control device and an electric device such as a relay for controlling a state of charge of a plurality of the energy storage devices 100 included in the energy storage device unit 20 may be disposed inside the outer case 10. In this case, the energy storage apparatus 1 may include a positive electrode external terminal and a negative electrode external terminal which are fixed to the lid body 11, and are electrically connected to the energy storage device unit 20 through the electric equipment and the bus bar 60.

An electrical connection aspect of twelve of the energy storage devices 100 by the bus bars 60 is not limited to the above aspect, and all of twelve of the energy storage devices 100 may be connected in series by a plurality of the bus bars 60. Further, the number of the energy storage devices 100 included in the energy storage device unit 20 is not limited to twelve. The number of the energy storage devices 100 may be appropriately determined according to specifications required for the energy storage apparatus 1.

In the energy storage apparatus 1 configured as described above, a structure in which the projecting portion 18 which forms a portion of the outer case 10 presses the energy storage device 100 toward the bottom wall portion 19 is employed. To be more specific, each of a plurality of the energy storage devices 100 is pressed by the projecting portion 18 through one or two of the cell holders 130. Hereinafter, a configuration of the projecting portion 18 included in the outer case 10 and around the projecting portion 18 will be described with reference to Figs. 4 to 8.

### [2. Regarding configuration of projecting portion and around projecting portion]

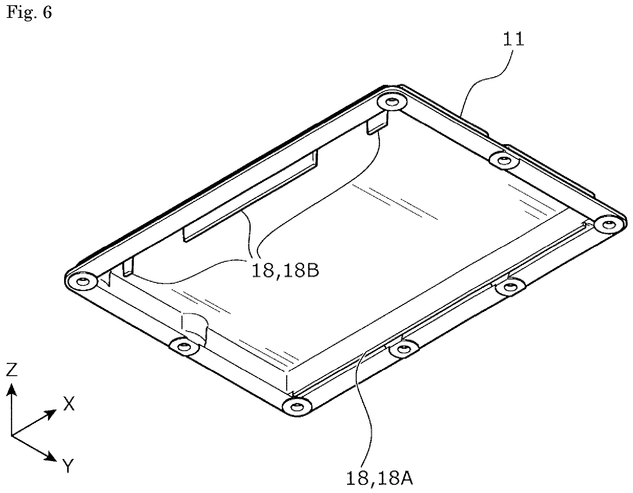

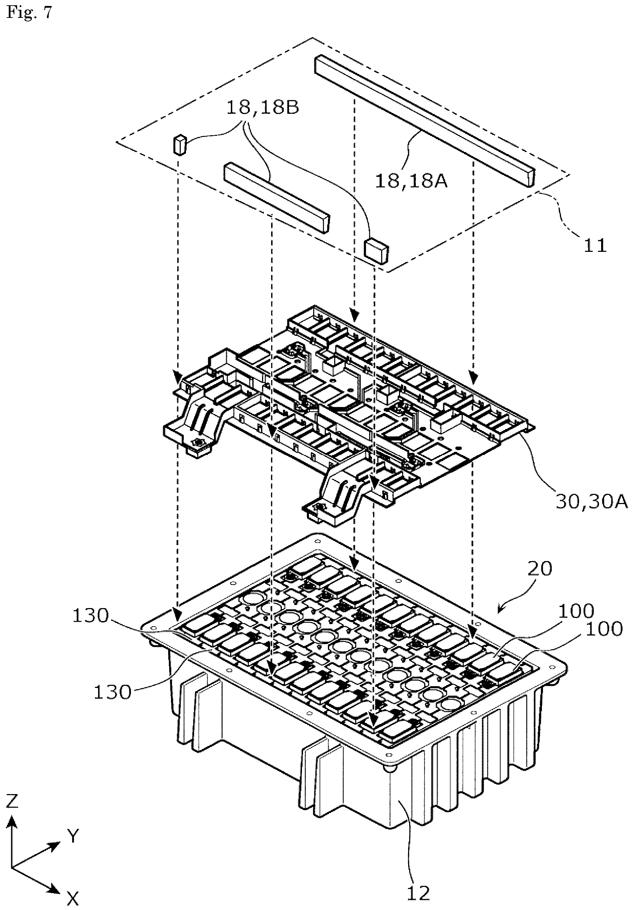

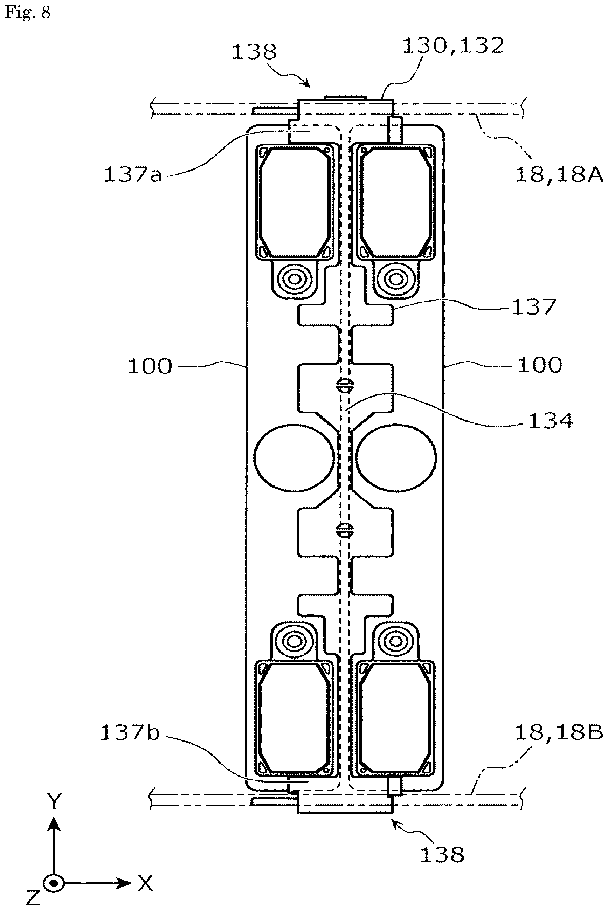

Fig. 4 is a perspective cross-sectional view of the energy storage apparatus 1 according to the embodiment. Fig. 4 illustrates the energy storage apparatus 1 in a state of being cut along a YZ plane passing through line IV-IV in Fig. 2. Fig. 5 is a perspective view illustrating an external appearance of the cell holder 130 according to the embodiment. Fig. 6 is a perspective view of the lid body 11 according to the embodiment. In Fig. 6, in order to clearly illustrate the projecting portion 18 of the lid body 11, the lid body 11 in a case of being viewed obliquely from below is illustrated in a perspective view. Fig. 7 is a perspective view illustrating a structural relationship between the projecting portion 18, a plurality of the cell holders 130, and a plurality of the energy storage devices 100 according to the embodiment. In Fig. 7, an approximate outer shape of the lid body 11 is illustrated by a two-dot chain line, and illustration of the bus bar 60 and the bus bar cover 30B is omitted. Fig. 8 is a plan view illustrating a position where the cell holder 130 according to the embodiment is pressed by the projecting portion 18. In Fig. 8, illustration of the bus bar holder 30A and the like is omitted, and an approximate arrangement range of a tip portion of the projecting portion 18 is indicated by a two-dot chain line.

As illustrated in Figs. 4 to 8, in the present embodiment, the lid body 11 of the outer case 10 has the projecting portion 18 that presses the cell holder 130. As illustrated in Figs. 4 and 6 to 8, the projecting portion 18 is disposed at a position facing each of both end portions in the Y-axis direction of the cell holder 130. Hereinafter, two of the projecting portions 18 that press both end portions in the Y-axis direction of the cell holder 130 will be referred to as projecting portions 18A and 18B in a case of being distinguished from each other. Specifically, the projecting portion 18 that presses an end portion in the Y-axis positive direction of the cell holder 130 is referred to as the projecting portion 18A, and the projecting portion 18 that presses an end portion in the Y-axis negative direction of the cell holder 130 is referred to as the projecting portion 18B.

As illustrated in Fig. 5, the cell holder 130 which is pressed from above (the Z-axis positive direction) by the projecting portion 18 has five wall portions, each of which is disposed so as to face one of the energy storage devices 100. Specifically, the cell holder 130 includes a holder main body portion 134, a pair of side surface cover portions 135, a bottom surface cover portion 136, and an upper surface cover portion 137. The holder main body portion 134 is disposed along the long side surface 110a of the energy storage device 100. A pair of the side surface cover portions 135 are connected to both end portions in the Y-axis direction of the holder main body portion 134. Each of a pair of the side surface cover portions 135 covers a part of the short side surface 110b of the energy storage device 100. The bottom surface cover portion 136 is connected to an end portion in the Z-axis negative direction of the holder main body portion 134, and covers a part of the bottom surface 110c of the energy storage device 100. The side surface cover portion 135 is connected to each of both end portions in the Y-axis direction of the bottom surface cover portion 136. The upper surface cover portion 137 is connected to an end portion in the Z-axis positive direction of the holder main body portion 134, and covers a part of an upper surface of the lid plate 112 of the energy storage device 100. In the present embodiment, the upper surface cover portion 137 has upper surface end portions 137a and 137b at both end portions in the Y-axis direction. In the present embodiment, a part of each of the upper surface end portions 137a and 137b is pressed by the projecting portion 18.

As described above, in the present embodiment, the cell holder 130 has a shape which surrounds the energy storage devices 100 from a plurality of directions and is opened in at least one direction other than the Z-axis direction. The cell holder 130 achieves both stable holding of the energy storage device 100 and ease of attachment to the energy storage device 100.

The cell holder 130 according to the present embodiment has a portion brought into contact with an adjacent one of the cell holders 130 in the Z-axis direction and the Y-axis direction. Specifically, as illustrated in Fig. 5, the cell holder 132 which is an inter-cell holder includes, in each of a pair of the side surface cover portions 135, a protrusion 135a protruding in the X-axis negative direction and a protrusion insertion portion 135b opening in the X-axis positive direction. The protrusion 135a of the cell holder 132 is inserted into the protrusion insertion portion 135b of the cell holder 132 located in the X-axis negative direction of the cell holder 132. The protrusion 135a of the cell holder 132 located in the X-axis positive direction of the cell holder 132 is inserted into the protrusion insertion portion 135b of the cell holder 132. In a case where the cell holder 130 adjacent to the cell holder 132 is an end holder (the cell holder 131), the protrusion 135a of the cell holder 132 is inserted into a protrusion insertion portion of the cell holder 131. Alternatively, a protrusion of the cell holder 131 is inserted into the protrusion insertion portion 135b of the cell holder 132. Each of a plurality of the cell holders 130 has a portion, such as a part of each of the bottom surface cover portion 136 and the upper surface cover portion 137, which is the projecting portion 18 can be brought into contact with one or more of the cell holders an adjacent one of the cell holders 130 in the Z-axis direction or the Y-axis direction.

The energy storage device unit 20 (see Fig. 3) including a plurality of the cell holders 130 configured as described above is supported from the Z-axis negative direction by the bottom wall portion 19 in the inside of the outer case 10. The energy storage device unit 20 is surrounded by four wall portions (including the side wall portions 15 and 17) of the outer case main body 12 disposed in the vicinity of both sides in the X-axis direction and the Y-axis direction (see Fig. 2 and Fig. 7). On the other hand, although the lid body 11 is disposed in the Z-axis positive direction of (above) the energy storage device unit 20, the bus bars 60, the bus bar holder 30A, and the like need to be disposed. For this reason, a distance between the energy storage device unit 20 and the lid body 11 is relatively long. Restricting movement in the Z-axis direction (more specifically, movement in the Z-axis positive direction) of the energy storage device 100 of the energy storage device unit 20 is more difficult than restricting movement in a direction orthogonal to the Z-axis direction.

Therefore, in the energy storage apparatus 1 according to the present embodiment, a structure in which the cell holder 130 is pressed by the projecting portion 18 which is a part of the lid body 11 is employed. In the present embodiment, as described above, the cell holder 130 which holds the energy storage device 100 has a shape which is opened to one side in the arrangement direction (X-axis direction) of the energy storage devices 100 and surrounds another side in the arrangement direction and a direction orthogonal to the arrangement direction. Focusing on one of the energy storage devices 100 held by one of the cell holders 130, as to movement of the energy storage device 100, movement in the Y-axis direction and the Z-axis direction is restricted, and movement to one side in the X-axis direction is restricted by the cell holder 130. In a case where the cell holder 130 is pressed by the projecting portion 18 in the projecting direction (Z-axis negative direction), movement in at least the Z-axis direction of the cell holder 130 is restricted. As a result, movement in the Z-axis direction of the energy storage device 100 disposed between the bottom surface cover portion 136 and the upper surface cover portion 137 of the cell holder 130 is also restricted. In order to obtain this effect, the cell holder 130 only needs to include at least the bottom surface cover portion 136 and the upper surface cover portion 137 in addition to the holder main body portion 134. However, in the present embodiment, the outer case 10 is made from metal, and the cell holder 130 is formed of an insulating material such as resin. Further, in a case where the cell holder 130 is pressed by the projecting portion 18, frictional force between the bottom surface cover portion 136 of the cell holder 130 and the outer case main body 12 increases. For this reason, restriction of movement in a direction orthogonal to the Z-axis direction of the cell holder 130 can also be expected. From the viewpoint of more reliably insulating the outer case 10 and the energy storage device 100 from each other and/or from the viewpoint of more reliably restricting movement in the Y-axis direction of the energy storage device 100, the cell holder 130 preferably has a pair of the side surface cover portions 135.

In the present embodiment, each of both end portions in the Y-axis direction of the energy storage device unit 20 is pressed by the projecting portions 18. As illustrated in Figs. 4 and 7, the projecting portions 18 press a plurality of the cell holders 130 disposed in the X-axis direction via the bus bar holder 30A which is the insulating member 30. As illustrated in Figs. 6 and 7, in the projecting portions 18, the projecting portion 18B that presses an end portion in the Y-axis negative direction includes a plurality of portions separated in the X-axis direction. This is due to a shape of the bus bar holder 30A with which the projecting portion 18B is in direct contact. That is, in order to avoid a portion of the bus bar holder 30A that is difficult or impossible to be pressed by the projecting portion 18B, the projecting portion 18B includes a plurality of portions separated in the X-axis direction. Constituting the projecting portion 18B by a plurality of portions separated from each other is not essential. The projecting portion 18B may be a series of portions having substantially the same length as the energy storage device unit 20 in the X-axis direction like the projecting portion 18A illustrated in Fig. 6 and Fig. 7.

As described above, the energy storage apparatus 1 according to the present embodiment includes a plurality of the energy storage devices 100 disposed and aligned, a plurality of the cell holders 130, and the outer case 10 which accommodates a plurality of the energy storage devices 100 and a plurality of the cell holders 130. Each of a plurality of the cell holders 130 is disposed along a side surface of an energy storage device included in a plurality of the energy storage devices 100, the side surface being in the arrangement direction (X-axis direction) of a plurality of the energy storage devices 100. The outer case 10 includes the outer case main body 12 having an opening portion 12a into which the energy storage device 100 and the cell holder 130 can be inserted, and the lid body 11 which closes the opening portion 12a. The lid body 11 has the projecting portion 18 projecting toward at least one of the cell holders 130 among a plurality of the cell holders 130. The projecting portion 18 presses at least one of the cell holders 130 in a projecting direction of the projecting portion 18.

As described above, in the energy storage apparatus 1 according to the present embodiment, by fixing the lid body 11 to the outer case main body 12, the cell holder 130 which holds the energy storage devices 100 is pressed by the projecting portion 18 of the lid body 11. By the above, movement of the cell holder 130 inside the outer case 10 can be restricted, and as a result, movement of the energy storage device 100 held by the cell holder 130 is restricted. In the energy storage apparatus 1 including a plurality of the energy storage devices 100, movement (positional displacement) of a plurality of the energy storage devices 100 due to vibration or impact at the time of manufacturing, using, transporting or the like of the energy storage apparatus 1 is restricted. By the above, occurrence of a defect of the energy storage apparatus 1 caused by vibration or impact is prevented. Since the projecting portion 18 restricts movement of the energy storage device 100 via the cell holder 130, damage or the like of the energy storage device 100 by the projecting portion 18 hardly occurs. As described above, the energy storage apparatus 1 according to the present aspect is the energy storage apparatus 1 having improved reliability by a simple configuration.

The energy storage apparatus 1 according to the present embodiment includes the insulating member 30 disposed between the energy storage device 100 and the lid body 11. The projecting portion 18 presses at least one of the cell holders 130 in a projecting direction via the insulating member 30.

According to this configuration, in a case where reliability of holding the energy storage device 100 is improved by forming the cell holder 130 using a relatively hard material, tolerance of each of the projecting portion 18 and the cell holder 130 can be absorbed by the insulating member 30 interposed between the projecting portion 18 and the cell holder 130. For this reason, damage to the cell holder 130 due to pressing force of the projecting portion 18 is more reliably prevented. Further, In the present embodiment, since the entire lid body 11 including the projecting portion 18 is made from metal, the cell holder 130 can be pressed with relatively large pressing force, while the projecting portion 18 having conductivity is in a state of being disposed at a position close to the energy storage device 100. However, in the present embodiment, since the insulating member 30 is interposed in addition to the cell holder 130 between the projecting portion 18 and the energy storage device 100, reliability of insulation between the projecting portion 18 and the energy storage device 100 is secured.

In the present embodiment, the insulating member 30 is specifically the bus bar holder 30A which holds the bus bar 60 joined to the terminal 120 of the energy storage device 100.

According to this configuration, the bus bar holder 30A used for positioning the bus bar 60 and the like can be used as a member for absorbing tolerance of the projecting portion 18 and the like.

In the present embodiment, the projecting portion 18 is disposed at a position where a non-overlapping region 138 which is a region not overlapping the energy storage device 100 of at least one of the cell holders 130 is pressed in a case of being viewed in an arrangement direction of the lid body 11 and the outer case main body 12 (as viewed in top view).

To be more specific, as illustrated in Fig. 8, the cell holder 132 holds two of the energy storage devices 100 disposed along the holder main body portion 134. The cell holder 132 has the upper surface end portions 137a and 137b at both end portions in the Y-axis direction of the upper surface cover portion 137. The upper surface end portions 137a and 137b include a region (the non-overlapping region 138) which does not overlap two of the energy storage devices 100 in top view. In the present embodiment, the projecting portion 18 restricts movement of the cell holder 132 and the energy storage device 100 by pressing the non-overlapping region 138 of the cell holder 132. More specifically, the non-overlapping region 138 included in the upper surface end portion 137a of the cell holder 132 is pressed by the projecting portion 18A. The non-overlapping region 138 included in the upper surface end portion 137b of the cell holder 132 is pressed by the projecting portion 18B. Although not illustrated in Fig. 8, in the cell holder 131 which is an end holder, similarly, two non-overlapping regions which are a part of an upper surface end portion located at both end portions in the Y-axis direction are pressed by the projecting portions 18 (18A and 18B).

According to this configuration, pressing force generated by the projecting portion 18 is hardly applied to the energy storage device 100. In a case where movement of the cell holder 130 and the energy storage device 100 is more reliably restricted by increasing pressing force with respect to the cell holder 130 of the projecting portion 18, deformation or the like of the case 110 of the energy storage device 100 due to the pressing force is less likely to occur.

In the present embodiment, both the upper surface end portions 137a and 137b forming the non-overlapping region 138 are portions where the holder main body portion 134 and a pair of the side surface cover portions 135 intersect in directions orthogonal to each other (see Fig. 5). That is, the upper surface end portions 137a and 137b are disposed at a portion where the holder main body portion 134 and a pair of the side surface cover portions 135 intersect in a T shape in top view. The upper surface end portions 137a and 137b are provided with the non-overlapping region 138 which is a region pressed by the projecting portion 18. The projecting portion 18 is in a state of pressing a portion (portion having high durability) that is resistant to pressing force in the Z-axis direction in the cell holder 130. For this reason, the projecting portion 18 can more reliably restrict movement of the cell holder 130 by relatively large pressing force.

The energy storage apparatus 1 including the non-overlapping region 138 can also be expressed as described below. That is, an energy storage apparatus 1 according to one aspect of the present invention includes the energy storage device 100, the cell holder 130 that holds the energy storage device 100, and the outer case 10 that accommodates the energy storage device 100 and the cell holder 130. The outer case 10 includes the outer case main body 12 that includes the opening portion 12a into which the energy storage device 100 and the cell holder 130 can be inserted and the lid body 11 that closes the opening portion 12a, the lid body 11 includes the projecting portion 18 that projects toward the cell holder 130 and includes the projecting portion 18 that presses the cell holder 130 in a projecting direction of the projecting portion 18, and the projecting portion 18 is disposed at a position that presses a region of the cell holder 130, the region not overlapping the energy storage device 100 in a case of being viewed from an arrangement direction of the lid body 11 and the outer case main body 12.

According to this configuration, by fixing the lid body 11 to the outer case main body 12, the cell holder 130 which holds the energy storage devices 100 is pressed by the projecting portion 18 of the lid body 11. By the above, movement of the cell holder 130 inside the outer case 10 can be restricted, and as a result, movement of the energy storage device 100 held by the cell holder 130 is restricted. Since the projecting portion 18 presses a position of the cell holder 130, the position not overlapping the energy storage device 100, pressing force by the projecting portion 18 is hardly applied to the energy storage device 100. In a case where movement of the cell holder 130 and the energy storage device 100 is more reliably restricted by increasing pressing force with respect to the cell holder 130 of the projecting portion 18, deformation or the like of the case 110 of the energy storage device 100 due to the pressing force is less likely to occur. As described above, the energy storage apparatus 1 according to the present embodiment is an energy storage apparatus having a simple configuration and improved reliability.

In the present embodiment, the projecting portion 18 is disposed along an arrangement direction (X-axis direction) of a plurality of the energy storage devices 100 in the energy storage device unit 20, and is configured to press a plurality of the cell holders 130. That is, the projecting portion 18 collectively presses a plurality of the cell holders 130 in the projecting direction (Z-axis negative direction).

According to this configuration, since one of the projecting portion 18 can press a plurality of the cell holders 130 to a substantially uniform height positions, a gap in a height direction (Z-axis positive direction) of a plurality of the energy storage devices 100 is hardly generated. In the bus bar 60 joined to two or more of the energy storage devices 100 adjacent to each other, at a joint portion with the energy storage devices 100, stress concentration due to displacement of positions in the height direction of two or more of the energy storage devices 100 is less likely to occur. Occurrence of a defect at a joint portion between the bus bar 60 and the terminal 120 of the energy storage device 100 is prevented. This contributes to improvement of reliability of the energy storage apparatus 1.

The energy storage apparatus 1 according to the embodiment is described above mainly with respect to the configuration of the projecting portion 18 and around the projecting portion 18. However, the configuration of the projecting portion 18 and around the projecting portion 18 may be different from the configuration illustrated in Figs. 2 to 8. In view of the above, a modification example of the configuration of the projecting portion 18 and around the projecting portion 18 will be described below focusing on a difference from the above embodiment.

### [3-1. First modification example]

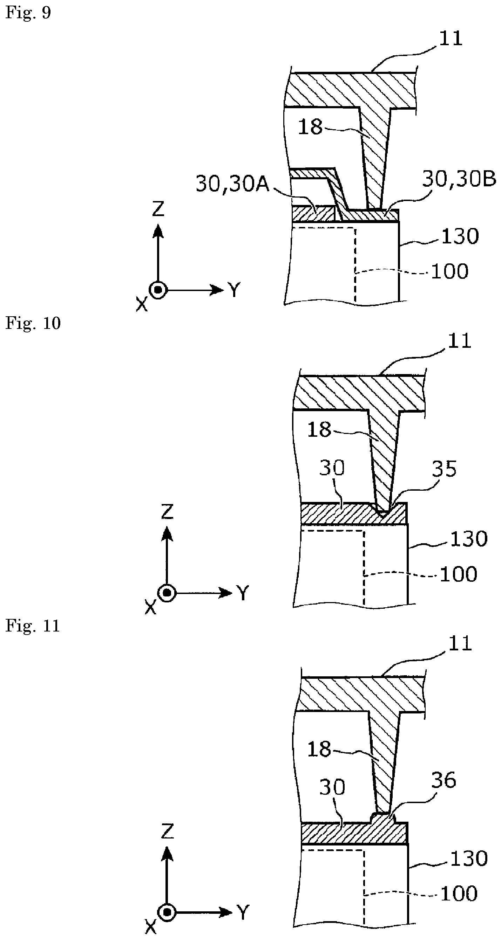

Fig. 9 is a cross-sectional view schematically illustrating a configuration of the projecting portion 18 and around the projecting portion 18 according to a first modification example of the embodiment. The projecting portion 18 illustrated in Fig. 9 is provided integrally with the lid body 11, and presses the cell holder 130 in a protruding direction (Z-axis negative direction). More specifically, the projecting portion 18 presses at least one of the cell holders 130 in the protruding direction via the insulating member 30.

Regarding these configurations, the present modification example is common to the above-described embodiment. In the present modification example, the insulating member 30 interposed between the projecting portion 18 and the cell holder 130 is the bus bar cover 30B that is disposed between the bus bar 60 and the lid body 11 and covers the bus bar 60. Regarding this point, the present modification example is different from the above embodiment.

According to this configuration, the bus bar cover 30B used for electrical insulation and the like between the bus bar 60 and another member can be used as a member for absorbing tolerance of the projecting portion 18 and the like.

### [3-2. Second modification example]

Fig. 10 is a cross-sectional view schematically illustrating a configuration of the projecting portion 18 and around the projecting portion 18 according to a second modification example of the embodiment. The projecting portion 18 illustrated in Fig. 10 is provided integrally with the lid body 11, and presses the cell holder 130 in the protruding direction (Z-axis negative direction). More specifically, the projecting portion 18 presses at least one of the cell holders 130 in the protruding direction via the insulating member 30.

Regarding these configurations, the present modification example is common to the above-described embodiment. The present modification example is different from the above-described embodiment in that a groove portion 35 is provided at a position pressed by the projecting portion 18. That is, in the present modification example, the groove portion 35 on which the projecting portion 18 abuts is provided at a position facing in the protruding direction (Z-axis negative direction) of the projecting portion 18. In the example illustrated in Fig. 10, since a direct contact partner of the projecting portion 18 is the insulating member 30, the groove portion 35 is provided in the insulating member 30.

According to this configuration, since a tip of the projecting portion 18 is guided to the inside of the groove portion 35, the projecting portion 18 can be caused to press a target position. As a result, the projecting portion 18 can more reliably press the cell holder 130 directly or indirectly (indirectly in the present modification example).

### [3-3. Third modification example]

Fig. 11 is a cross-sectional view schematically illustrating a configuration of the projecting portion 18 and around the projecting portion 18 according to a third modification example of the embodiment. The projecting portion 18 illustrated in Fig. 11 is provided integrally with the lid body 11, and presses the cell holder 130 in the protruding direction (Z-axis negative direction). More specifically, the projecting portion 18 presses at least one of the cell holders 130 in the protruding direction via the insulating member 30.

Regarding these configurations, the present modification example is common to the above-described embodiment. The present modification example is different from the above-described embodiment in that a convex part 36 is provided at a position pressed by the projecting portion 18. That is, in the present modification example, the convex part 36 on which the projecting portion 18 abuts is provided at a position facing in the protruding direction (Z-axis negative direction) of the projecting portion 18. In the example illustrated in Fig. 11, since a direct contact partner of the projecting portion 18 is the insulating member 30, the convex part 36 is provided in the insulating member 30.

According to this configuration, the convex part 36 is provided at a position facing the projecting portion 18. Therefore, at least a part of the convex part 36 is actively pressed by the projecting portion 18 or crushed as a result of the pressing, so that the projecting portion 18 can more reliably press the cell holder 130 directly or indirectly (indirectly in the present modification example).

### [4. Regarding other modification examples]

Although the energy storage apparatus 1 according to the embodiment of the present invention is described above, the present invention is not limited to this embodiment. That is, the embodiment disclosed herein is illustrative in all respects and is not restrictive, and the scope of the present invention includes all changes within the meaning and scope equivalent to the claims.

The projecting portion 18 protruding in the Z-axis negative direction from the lid body 11 only needs to be in direct contact with the cell holder 130. In this case as well, since a position in the Z-axis direction of the cell holder 130 is restricted by the projecting portion 18, an effect of restricting at least movement in the Z-axis direction of the energy storage device unit 20 can be obtained.

The projecting portion 18 of the lid body 11 does not essentially press a plurality of the cell holders 130. When a projecting portion which protrudes from the lid body 11 toward the energy storage device unit 20 (in the Z-axis negative direction) and is continuous in the X-axis direction is defined as one of the projecting portions 18, the number of the cell holders 130 which the one of the projecting portions 18 presses may be one. In this case as well, as described above, the one of the cell holders 130 pressed by the one of the projecting portions 18 has a portion (the protrusion 135a or the like) in contact in the Z-axis direction and the Y-axis direction with another one of the cell holders 130 adjacent in the X-axis direction. The one of the cell holders 130 can act so as not to move in the Z-axis direction and the Y-axis direction with respect to the another one of the cell holders 130. By the projecting portion 18 pressing at least one of the cell holders 130 of a plurality of the cell holders 130 included in the energy storage device unit 20, an effect of restricting movement of the energy storage device unit 20 can be obtained.

The cell holder 130 does not need to have a portion which is in contact in the Z-axis direction and the Y-axis direction with another one of the cell holders 130 adjacent in the X-axis direction, such as the protrusion 135a. In this case as well, movement in at least the Z-axis direction of a plurality of the cell holders 130 is restricted by one or a plurality of the projecting portions 18 pressing in the Z-axis negative direction a plurality of the cell holders 130 continuous in the X-axis direction.

In the cell holder 130, the upper surface end portions 137a and 137b at both ends in the Y-axis direction do not need to be pressed. In the cell holder 130, the configuration may be such that one of the upper surface end portions 137a and 137b at both ends in the Y-axis direction, or a portion other than the upper surface end portions 137a and 137b of the upper surface cover portion 137 is pressed by the projecting portion 18. In any case, pressing force in a direction (Z-axis negative direction) toward the bottom wall portion 19 of the outer case 10 acts from the projecting portion 18 on the cell holder 130. As a result, movement of the cell holder 130 holding the energy storage device 100 is restricted.

The cell holder 130 does not need to be entirely formed of a resin material such as PC or PP, and the cell holder 130 may be formed by coating, with a resin material such as PC or PP, a surface of a substrate formed of metal such as an aluminum alloy. In this case, mechanical strength of the cell holder 130 is improved as compared with a case where the entire cell holder 130 is formed of a resin material. For this reason, the projecting portion 18 can press the cell holder 130 with larger pressing force, and as a result, movement of the cell holder 130 is more reliably restricted.

The insulating member 30 disposed between the projecting portion 18 and the cell holder 130 may be other than the bus bar holder 30A and the bus bar cover 30B. A cap made from resin, which is a dedicated component for covering a tip portion of the projecting portion 18, may be employed as the insulating member 30 disposed between the projecting portion 18 and the cell holder 130.

The insulating member 30 does not need to be disposed between the projecting portion 18 and the cell holder 130. That is, the projecting portion 18 may directly press the cell holder 130. In this case as well, since the cell holder 130 is formed of an insulating material such as PC or PP, the projecting portion 18 made from metal and the energy storage device 100 are insulated from each other by the cell holder 130. In a case where the projecting portion 18 directly presses the cell holder 130, the groove portion 35 illustrated in Fig. 10 or the convex part 36 illustrated in Fig. 11 may be provided in the cell holder 130.

A shape and size of the projecting portion 18 are not particularly limited. A surface brought into contact with the cell holder 130 may be a flat surface or a curved surface. The projecting portion 18 may have a projecting main body portion projecting in the Z-axis negative direction from the lid body 11 and a contact portion projecting from the projecting main body portion and coming into contact with the cell holder 130 at a facing position. That is, the projecting portion 18 may have any size and shape as long as the projecting portion 18 can be brought into contact with one or more of the cell holders 130 disposed in the projecting direction from the lid body 11.

The projecting portion 18 may press a region different from a region (the non-overlapping region 138) which does not overlap the energy storage device 100 as viewed in top view in the cell holder 130. Apart of the energy storage device 100 may exist in the Z-axis negative direction of each of the projecting portion 18 illustrated in Fig. 8 and the projecting portion 18 illustrated in Fig. 9 to Fig. 11. In this case as well, the projecting portion 18 presses the energy storage device 100 in a state where at least a part of the cell holder 130 is disposed between the projecting portion 18 and the energy storage device 100. By the above, damage of the energy storage device 100 caused by the projecting portion 18 made from metal can be prevented while movement of the energy storage device 100 is restricted.

The outer case 10 which accommodates the energy storage device unit 20 does not need to be a housing which forms an outermost shell of the energy storage apparatus 1. A case which is disposed inside a housing which forms an outermost shell of the energy storage apparatus 1 and includes a case main body which accommodates the energy storage device 100 and a lid body which closes an opening portion of the case main body may be employed as the outer case 10. A case having one or more opening portions for heat dissipation or the like in a wall portion separating the inside and the outside of the outer case 10 may be employed as the outer case 10.

In a plurality of the energy storage devices 100 included in the energy storage apparatus 1, the cell holder 130 (the cell holder 132, see Fig. 3) does not need to be disposed between two adjacent ones of all the energy storage devices 100. In a case where two adjacent ones of the energy storage devices 100 are electrically connected in parallel, the cell holder 130 does not need to be disposed between the two of the energy storage devices 100. In this case as well, since each of the two of the energy storage devices 100 are held by one of the cell holders 130, movement inside the outer case 10 of the two of the energy storage devices 100 can be restricted. The cell holder 130 whose movement is restricted by being pressed by the projecting portion 18 can restrict movement of one of the energy storage device 100 held by the cell holder 130. In a case where the cell holder 130 is not disposed between two adjacent ones of the energy storage devices 100, a simple flat-plate-like insulating member (spacer) may be disposed as a member for insulating the cases 110 of the two of the energy storage devices 100. Insulation between the cases 110 of two adjacent ones of the energy storage devices 100 may be performed by an insulating sheet wound around each of the two of the cases 110. Also in a case where two adjacent ones of the energy storage devices 100 are electrically connected in series, as long as the cases 110 of the two of the energy storage devices 100 can be insulated from each other, the cell holder 130 does not need to be disposed between the two of the energy storage devices 100.

The energy storage device unit 20 may include not only a plurality of the energy storage devices 100 and a plurality of the cell holders 130 but also a plurality of the bus bars 60, the bus bar holder 30A, and the bus bar cover 30B (see Fig. 2). That is, a configuration in which a plurality of the bus bars 60, the bus bar holder 30A, and the bus bar cover 30B are added to the energy storage device unit 20 according to the embodiment may be referred to as an "energy storage device unit".

A mode constructed by optionally combining constituent elements included in the above embodiment and the modification example of the embodiment is also included in the scope of the present invention.

### INDUSTRIAL APPLICABILITY

The present invention can be applied to an energy storage apparatus including an energy storage device such as a lithium ion secondary battery.

### DESCRIPTION OF REFERENCE SIGNS

1: energy storage apparatus
10: outer case
11: lid body
12: outer case main body
12a: opening portion
18, 18A, 18B: projecting portion
19: bottom wall portion
20: energy storage device unit
30: insulating member
30A: bus bar holder
30B: bus bar cover
35: groove portion
36: convex part
100: energy storage device
110a: long side surface
110b: short side surface
110c: bottom surface
130, 131, 132: cell holder
134: holder main body portion
135: side surface cover portion
135a: protrusion
135b: protrusion insertion portion
136: bottom surface cover portion
137: upper surface cover portion
137a: upper surface end portion
137b: upper surface end portion
138: non-overlapping region

## Claims

1. An energy storage apparatus comprising:
a plurality of energy storage devices disposed and aligned;
a plurality of holders; and
an outer case which accommodates the plurality of energy storage devices and the plurality of holders,
wherein each of the plurality of holders is disposed along a side surface of an energy storage device included in the plurality of energy storage devices, the side surface being in an arrangement direction of the plurality of energy storage devices,
wherein the outer case includes an outer case main body having an opening portion and a lid body that closes the opening portion, and
wherein the lid body includes a projecting portion that projects toward at least one holder among the plurality of holders and presses the at least one holder in a projecting direction of the projecting portion.

2. The energy storage apparatus according to claim 1, further comprising an insulating member disposed between the energy storage device and the lid body, wherein the projecting portion presses the at least one holder in the projecting direction via the insulating member.

3. The energy storage apparatus according to claim 2, wherein
the energy storage device includes a terminal, and
the insulating member is a bus bar holder that holds a bus bar joined to the terminal, or a bus bar cover that is disposed between the bus bar and the lid body and covers the bus bar.

4. The energy storage apparatus according to any one of claims 1 to 3, wherein a groove portion or a convex part with which the projecting portion comes into contact is provided at a position facing in the projecting direction.

5. The energy storage apparatus according to any one of claims 1 to 3, wherein the projecting portion presses a region that is the at least one holder and does not overlap the energy storage device in a case of being viewed in an arrangement direction of the lid body and the outer case main body.

6. The energy storage apparatus according to any one of claims 1 to 3, wherein the projecting portion collectively presses the plurality of holders in the projecting direction.

7. An energy storage apparatus comprising:
an energy storage device;
a holder that holds the energy storage device; and
an outer case that accommodates the energy storage device and the holder,
wherein the outer case includes an outer case main body having an opening portion and a lid body that closes the opening portion,
wherein the lid body includes a projecting portion that projects toward the holder and presses the holder in a projecting direction of the projecting portion, and
wherein the projecting portion presses a region of the holder, the region not overlapping the energy storage device, in a case of being viewed in an arrangement direction of the lid body and the outer case main body.

8. An energy storage apparatus comprising:
a plurality of energy storage devices disposed and aligned;
a plurality of holders; and
an outer case which accommodates the plurality of energy storage devices and the plurality of holders,
wherein each of the plurality of holders is disposed along a side surface of an energy storage device included in the plurality of energy storage devices, the side surface being in an arrangement direction of the plurality of energy storage devices,
wherein the outer case includes an outer case main body having an opening portion and a lid body that closes the opening portion, and
wherein the lid body includes a projecting portion that projects toward at least one holder among the plurality of holders and is brought into contact with the at least one holder in a projecting direction of the projecting portion.

9. An energy storage apparatus comprising:
an energy storage device;
a holder that holds the energy storage device; and
an outer case that accommodates the energy storage device and the holder,
wherein the outer case includes an outer case main body having an opening portion and a lid body that closes the opening portion,
wherein the lid body includes a projecting portion that projects toward the holder and is brought into contact with the holder in a projecting direction of the projecting portion, and
wherein the projecting portion is brought into contact with a region of the holder, the region not overlapping the energy storage device, in a case of being viewed in an arrangement direction of the lid body and the outer case main body.
